# EUROPÄISCHE PATENTSCHRIFT

(11) **EP 0 667 201 B1**
(45) Veröffentlichungstag und Bekanntmachung des Hinweises auf die Patenterteilung: **06.08.1997**
(21) Anmeldenummer: 94104874.6
(22) Anmeldetag: 28.03.1994
(51) Int. Cl.: B23B 31/12

(54) **Bohrfutter, insbesondere zum Schlagbohren**
Drillchuck, especially for percussion drilling
Mandrin de perçage, en particulier pour le perçage avec percussion

(30) Priorität: 15.12.1993 DE 4342765
(43) Veröffentlichungstag der Anmeldung: 16.08.1995
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 519 412
- DD-A- 202 818
- DE-A- 3 411 127
- DE-A- 3 439 668

## Beschreibung

Die Erfindung betrifft ein Bohrfutter, insbesondere zum Schlagbohren, mit einem an eine Bohrspindel anschließbaren Futterkörper, mit zwischen sich eine Aufnahme für einen Bohrer bildenden Futterbacken, die in geneigt zur Futterachse im Futterkörper verlaufenden Bohrungen verschiebbar geführt sind, ferner mit einem am Futterkörper drehbar gelagerten, beim Verdrehen die Futterbacken zentrisch zur Futterachse verschiebenden Stellring, wobei die Futterbacken mit einer Verzahnung in ein konisches Stellgewinde am Stellring eingreifen und der Stellring bohrspindelseitig über ein Kugellager axial gegen den Futterkörper abgestützt ist, und mit einem konzentrisch zur Futterachse drehbaren Klemmring mit einer die Kugeln des Kugellagers führenden Lauffläche.

Bohrfutter dieser Art sind aus DE 34 11 127 A1 bekannt. Bei diesen bekannten Bohrfuttern ist das Kugellager doppelt vorgesehen und beide Kugellager sind axial hintereinander angeordnet, wobei der Klemmring mit einem Ringflansch zwischen die Kugellager greift, so daß die axiale Abstützung des Stellrings über beide Kugellager und den zwischen sie eingeschalteten Ringflansch des Klemmrings erfolgt. Der Ringflansch besitzt an mindestens einer seiner den Kugeln zugewandten Ringflächen in Umfangsrichtung aufeinander folgende, axiale Erhöhungen und Vertiefungen, die der Ringfläche einen wellenförmigen Verlauf in Umfangsrichtung erteilen. Normalerweise lagern die Kugeln in den Vertiefungen. Wird der Klemmring relativ zum Futterkörper oder Stellring verdreht, bewegen sich die Kugeln aus den Vertiefungen heraus in den Bereich der Erhöhungen, wodurch das Axialspiel des Stellrings verringert und die am Bohrer wirksame Spannkraft des Bohrfutters erhöht wird. Jedoch kann sich der Klemmring unter dem Einfluß der beim Bohren, insbes. Schlagbohren, auftretenden Erschütterungen und Schwingungen leicht wieder zurückdrehen, so daß die Kugeln wieder in die Vertiefungen gelangen und die zunächst erreichte Spannkrafterhöhung wieder verloren geht.

Der Erfindung liegt die Aufgabe zugrunde, ein Bohrfutter der eingangs genannten Art so auszubilden, daß eine wirksame Spannkrafterhöhung möglich ist und das Bohrfutter sich im Bohrbetrieb nicht selbsttätig im Sinne einer Spannkrafterniedrigung verstellen kann.

Diese Aufgabe wird nach der Erfindung dadurch gelöst, daß die Kugeln des Kugellagers in einem Lagerspalt laufen, den eine relativ zum Stellring feste Ringfläche und eine relativ zum Futterkörper feste Ringfläche zwischen sich bilden, wobei sich die Ringflächen axial gegenüber liegen und mindestens eine der Ringflächen als mit der Futterachse konzentrische Kegelfläche ausgebildet ist, so daß sich der Querschnitt des Lagerspalts radial von innen nach außen erweitert, daß ferner die Lauffläche des Klemmrings den Lagerspalt radial außen umgibt, so daß die Kugeln zusätzlich radial von außen her an der ebenfalls als Kegelfläche ausgebildeten Lauffläche des Klemmrings abgestützt sind, und daß der Klemmring in einem mit der Futterachse koaxialen Klemmgewinde verdrehbar und durch Verdrehen im Klemmgewinde axial relativ zu den Kugeln verstellbar ist.

Zum Spannen des erfindungsgemäßen Bohrfutters wird zunächst der Stellring im Sinne des Schließens des Bohrfutters verdreht, bis die Futterbacken am Schaft des einzuspannenden Bohrers zur Anlage kommen und ein weiteres Spannen des Bohrers durch Verdrehen des Stellrings nicht mehr möglich ist. Anschließend wird der Klemmring so verdreht, daß er über seine kegelige Lauffläche die Kugeln im Lagerspalt radial einwärts drückt, die dadurch über die kegelige Ringfläche an Futterkörper und/oder Stellring den letzteren relativ zum Futterkörper axial nach vorn in Richtung zum Bohrer hindrücken, was eine Erhöhung der Spannkraft der Futterbacken zur Folge hat. Die dadurch erreichte Spannkraft ist erheblich größer als die allein durch Verdrehen des Stellrings im Stellgewinde erreichbare Spannkraft, da das Klemmgewinde geringere Steigung als das Stellgewinde erhalten kann und eine weitere Kraftübersetzung an den Kegelflächen des Klemmrings und des Lagerspalts stattfindet. Durch Spannen des Bohrfutters nur von Hand können im Ergebnis unschwer Spannkräfte erreicht werden, die denen eines mit einem Schlüssel gespannten Bohrfutters in keiner Weise nachstehen.

In einer ersten bevorzugten Ausführungsform der Erfindung ist das Klemmgewinde am Futterkörper vorgesehen und der Gewindesinn so gewählt, daß der Klemmring beim Verdrehen in der dem Öffnen des Bohrfutters entsprechenden Drehrichtung des Stellrings eine Axialverstellung erfährt, bei der die Lauffläche des Klemmrings die Kugeln im Lagerspalt radial einwärts verstellt. Wird daher das Bohrfutter beim Spannen mit der einen Hand am Stellring und mit der anderen Hand am Klemmring erfaßt und werden beide gegeneinander im Sinne eines Schließens des Bohrfutters verdreht, so nimmt der Stellring nach Anlage der Futterbacken am Bohrerschaft beim weiteren Drehen den Futterkörper gegenüber dem festgehaltenen Klemmring mit, so daß sich letzterer im Klemmgewinde dreht und die Spannkrafterhöhung ergibt. Eine für diese Wirkungsweise konstruktiv sehr einfache Ausführungsform ist dadurch gekennzeichnet, daß der Klemmring beim Verdrehen in der dem Öffnen des Bohrfutters entsprechenden Drehrichtung des Stellrings sich axial nach vorn in Richtung zum Bohrer hin verstellt, und daß sich die kegelige Lauffläche des Klemmrings nach hinten in Richtung zur Bohrspindel hin verengt. Weiter empfiehlt es sich, zwischen dem Klemmring und dem Stellring eine beide in Drehrichtung miteinander kraftschlüssig verbindende Kupplung vorzusehen, die im einfachsten Fall von einem reibungsschlüssigen O-Ring gebildet sein kann, der in einer Ringnut am Stellring oder am Klemmring gehalten und reibschlüssig dem jeweils anderen Ring anliegt. Eine solche Kupplung hat vor allem den Vorteil, daß der vom Stellring durch die Kupplung mitgenommene Klemmring zu einer Nachspannung des Bohrfutters führt, sollte sich beim Bohren, insbes. Schlagbohren, ein selbsttätiges Verdrehen des Stellrings im Sinne eines Öffnens des Bohrfutters ergeben. - Im übrigen ist zweckmäßigerweise zwischen dem Klemmring und dem Futterkörper eine Rasteinrichtung mit in Drehrichtung des Klemmrings aufeinander folgenden Raststellungen vorgesehen. Eine solche Rasteinrichtung stellt auf besonders einfache Weise sicher, daß sich beim Schließen des Bohrfutters zunächst nur der Stellring gegenüber dem Futterkörper verdreht und die Drehung des Klemmrings gegenüber dem Futterkörper erste nach Anlage der Futterbacken am Bohrerschaft zustande kommt, wenn sich der Stellring gegenüber dem Futterkörper nicht mehr weiter im Sinne eines Schließens des Bohrfutters verdrehen läßt. Dabei kann es von Vorteil sein, die Anordnung so zu treffen, daß die zum Lösen der Raststellungen führenden Drehmomente in entgegen gesetzten Drehrichtungen des Klemmrings verschieden sind, insbesondere beim Verdrehen des Klemmrings in der dem Öffnen des Bohrfutters entsprechenden Drehrichtung des Stellrings kleiner als umgekehrt. Beim Lösen des Bohrfutters kann sich dann erst der Klemmring und erst dann der Stellring relativ zum Futterkörper verdrehen, letzterer also erst, nachdem durch die Drehung des Klemmrings die Spannkraft erniedrigt worden ist. Die Wirkung der Rasteinrichtung muß dabei unabhängig sein von der axialen Stellung des Klemmrings relativ zum Futterkörper. Dies kann konstruktiv unschwer dadurch erreicht werden, daß die Rasteinrichtung ein im Klemmring axial unter der Kraft einer Rastfeder verstellbares Rastglied aufweist, das in Rastausnehmungen eingreift, die längs eines Kreises in einer Ringscheibe vorgesehen sind, die fest am Futterkörper angeordnet ist und den Klemmring an einer rückwärtigen, der Bohrspindel zugewandten Stirnfläche radial übergreift. Die Rastausnehmungen können randseitig in der dem Öffnen des Bohrfutters entsprechenden Drehrichtung des Stellrings angeschrägt sein, um den schon erwähnten, von der Drehrichtung abhängigen Unterschied in den zum Lösen des Rastsitzes führenden Drehmomenten zu erhalten.

Die vorstehend beschriebenen Bohrfutter bedürfen zum Öffnen und Schließen einer beidhändigen Betätigung, nämlich mit der einen Hand am Stellring, mit der anderen am Klemmring. Es besteht aber im Rahmen der Erfindung auch die Möglichkeit, zum Öffnen und Schließen des Bohrfutters den Bohrmaschinenantrieb auszunutzen und das Bohrfutter bei entsprechend laufender Bohrmaschine nur am Stellring zu halten. Um diese Möglichkeit zu verwirklichen, wird in weiterer Ausbildung der Erfindung die Anordnung vorzugsweise so getroffen, daß der Stellring aus einem das Stellgewinde und die Ringfläche für die Kugeln tragenden Gewindering und aus einer Stellhülse besteht, die gegeneinander verdrehbar und axial unverschiebbar verbunden sowie in Drehrichtung durch eine erste Rasteinrichtung mit in Drehrichtung aufeinander folgenden Raststellungen miteinander gekuppelt sind, wobei durch Verdrehen der Stellhülse relativ zum Gewindering bei offener Rasteinrichtung der Klemmring im Klemmgewinde verdreht wird, dessen Gewindesinn so gewählt ist, daß der Klemmring beim Verdrehen der Stellhülse gegenüber dem Gewindering in der dem Schließen des Bohrfutters entsprechenden Drehrichtung eine Axialverstellung erfährt, bei der die Lauffläche des Klemmrings die Kugeln im Lagerspalt radial einwärts verstellt. Haben sich beim gegenseitigen Verdrehen von Futterkörper und Stellhülse im Sinne eines Schließens des Bohrfutters die Futterbacken an den Bohrerschaft angelegt, läßt sich der Gewindering also nicht mehr weiter verdrehen, öffnet sich die erste Rasteinrichtung mit dem Ergebnis, daß beim weiteren gegenseitigen Verdrehen von Stellhülse und Futterkörper nun der Klemmring sich im Klemmgewinde verdreht und entsprechend in einer die Spannkraft erhöhenden Weise axial verstellt. Auch hier empfiehlt es sich, dazu die Anordnung zweckmäßigerweise so zu treffen, daß der Klemmring beim Verdrehen der Stellhülse gegenüber dem Gewindering in der dem Schließen des Bohrfutters entsprechenden Drehrichtung sich axial nach vorn in Richtung zum Bohrer hin verstellt, und daß sich die kegelige Lauffläche des Klemmrings nach hinten in Richtung zur Bohrspindel hin verengt. Im einzelnen kann das Klemmgewinde auf verschiedene Weisen angeordnet werden.

In einer ersten bevorzugten Ausführungsform ist der Klemmring undrehbar und axial verschiebbar mit dem Gewindering verbunden und das Klemmgewinde an der Stellhülse vorgesehen, und die erste Rasteinrichtung besitzt einen im Gewindering radial unter der Kraft einer Rastfeder verstellbaren Raststift, der durch einen axialen Schlitz im Klemmring hindurch in Rastausnehmungen eingreift, die in Umfangsrichtung verteilt auf der Innenseite der Stellhülse angeordnet sind. Der den Klemmring im axialen Schlitz durchsetzende Raststift ergibt dabei zugleich die Sicherung des Klemmrings gegen Verdrehen relativ zum Gewindering. Um sicherzustellen, daß beim Lösen dieses Bohrfutters durch Drehen der Stellhülse zunächst immer der Klemmring axial zurückgestellt, also an einem Mitdrehen mit der Stellhülse gehindert wird, auch wenn sich der Gewindering schon leicht verdrehen läßt, weil sich beispielsweise der Bohrer an den Futterbacken während des Bohrbetriebs freigeschlagen hat und deswegen der Gewindering im Stellgewinde nicht mehr mit den Futterbacken verspannt ist, empfiehlt es sich, daß zwischen dem Klemmring und dem Futterkörper eine zweite Rasteinrichtung mit in Drehrichtung aufeinander folgenden Raststellungen vorgesehen ist, wobei die Raststellungen unabhängig von der Axialstellung des Klemmrings sind und nur in einer axial rückwärtigen, in Richtung zur Bohrspindel hin liegenden Endstellung des Klemmrings aufgehoben sind. In dieser Endstellung kann sich dann der Klemmring immer mit der Stellhülse und dem Gewindering mitdrehen, wenn beispielsweise bei offenem Bohrfutter der Spanndurchmesser verstellt werden soll. Die Wirkung der zweiten Rasteinrichtung muß wiederum unabhängig von der Axialstellung des Klemmrings sein. Konstruktiv kann das in einfacher Weise dadurch verwirklicht werden, daß die zweite Rasteinrichtung einen im Futterkörper radial unter der Kraft einer Rastfeder verstellbaren Raststift aufweist, der in auf der Innenseite des Klemmrings über den Umfang verteilt angeordnete Rastausnehmungen eingreift, die jeweils als im wesentlichen axial verlaufende Rillen ausgebildet sind und am vorderen, in Richtung zum Bohrer hin liegenden Ende in eine im Klemmring ausgebildete Umfangsnut münden, die in der hinteren Endstellung des Klemmrings den Raststift aufnimmt. Diese hintere Endstellung kann dadurch vorgegeben sein, daß die Stellhülse einen Anschlagring aufweist, an dem der Klemmring in seiner hinteren Endstellung axial zur Anlage kommt.

In einer zweiten bevorzugten Ausführungsform ist der Klemmring undrehbar und axial verschiebbar mit der Stellhülse verbunden und das Klemmgewinde am Gewindering vorgesehen.

Eine dritte bevorzugte Ausführungsform ist dadurch gekennzeichnet, daß der Klemmring undrehbar und axial verschiebbar mit der Stellhülse verbunden und das Klemmgewinde an einem Lagerring vorgesehen ist, der die relativ zum Futterkörper feste Ringfläche des Lagerspalts trägt, der ferner axial am Futterkörper verschiebbar und drehbar um die Futterachse geführt ist und der axial rückwärts, d.
h. in Richtung zur Bohrspindel hin, gegen eine Ringschulter des Futterkörpers abstützbar ist, wobei im an der Ringschulter abgestützten Zustand der Lagerring gegen Drehung gesichert ist, und daß eine Rückstellfeder vorgesehen ist, durch die der Lagerring zur Freigabe seiner Verdrehbarkeit von der Ringschulter axial nach vorn abhebbar ist. Ist das Bohrfutter offen, ist der Lagerring durch die Rückstellfeder von der Ringschulter des Futterkörpers abgehoben und somit frei verdrehbar, so daß er sich beim Verdrehen der Stellhülse mit dem Klemmring mitdrehen kann und gegenseitige Verdrehungen zwischen Klemmring und Lagerring im Klemmgewinde ausgeschlossen sind. Ist dagegen das Bohrfutter geschlossen und dadurch der Lagerring gegen die Ringschulter gedrückt und gegen Verdrehung gesichert, führt die Drehung der Stellhülse zu einer entsprechenden Drehung des Klemmrings relativ zum Lagerring, so daß sich der Klemmring im Klemmgewinde axial verstellt.

Die Sicherung des Lagerrings an der Ringschulter gegen Drehen kann durch Kraftschluß in Umfangsrichtung erfolgen. Um dabei auf einfache Weise einen großen Kraftschluß zu erreichen, empfiehlt es sich, daß die Ringschulter und die ihr im abgestützten Zustand anliegende Ringfläche des Lagerrings konisch mit sich axial nach vorn verjüngendem Kegelwinkel ausgebildet sind. Zweckmäßigerweise ist die Rückstellfeder eine einerseits am Lagerring, andererseits an einem Widerlager der Stellhülse abgestützte Druckfeder. Im übrigen empfiehlt es sich, daß die Rückstellfeder eine einerseits am Lagerring, andererseits an einem Widerlager der Stellhülse abgestützte Druckfeder ist. So wird in einfacher Weise erreicht, daß beim Lösen des gespannten Bohrfutters zuerst die Klemmhülse und erst dann der Gewindering zurückgestellt werden.

Welche Ausführungsform der Erfindung im einzelnen auch gewählt werden mag, immer laufen die Kugeln im Lagerspalt jeweils an drei Flächen ab, nämlich an den beiden den Lagerspalt axial begrenzenden Ringflächen und an der den Lagerspalt radial außen umgebenden Lauffläche des Klemmrings. Um ein möglichst reibungsarmes Ablaufen der Kugeln an diesen drei Flächen zu ermöglichen, sollte, im Querschnitt des Lagerspalts gesehen, die Anordnung vorzugsweise so gewählt werden, daß die Mantellinie der Lauffläche des Klemmrings senkrecht steht auf der Winkelhalbierenden zwischen den Mantellinien beider den Lagerspalt axial begrenzenden Ringflächen. Dann sind die Berührungspunkte jeder Kugel mit den beiden Ringflächen in Kugelumfangsrichtung jeweils gleich weit vom Berührungspunkt mit der Lauffläche entfernt, so daß letzterer Berührungspunkt in der Kugelachse liegt, um die sich die Kugel beim Abrollen an den Ringflächen dreht. Zweckmäßigerweise schließt die Winkelhalbierende mit den Mantellinien der Ringflächen einen Winkel von 30° ein. Dann besitzt der Querschnitt des Lagerspalts geometrisch die Form eines gleichseitigen Dreiecks mit jeweils einem Neigungswinkel von 120° zwischen den beiden Ringflächen und zwischen jeder Ringfläche und der Lauffläche, so daß, über den Kugelumfang gesehen, alle drei Berührungspunkte gleichen Abstand voneinander besitzen.

Im Prinzip können im Rahmen der Erfindung beide Ringflächen als Kegelflächen ausgebildet sein. Einfacher und daher bevorzugt ist es aber, die relativ zum Stellring feste Ringfläche als ebene, zur Futterachse senkrechte Fläche auszubilden, die fertigungsmäßig unschwer unmittelbar an den Stellring, bzw. Gewindering angearbeitet werden kann. Die relativ zum Futterkörper feste kegelige Ringfläche ist dann zweckmäßigerweise am Lagerring ausgebildet, der an der Ringschulter des Futterkörpers gehalten ist.

Im übrigen empfiehlt es sich, den Stellring axial nach vorn in Richtung zum Bohrer hin über ein Federglied gegen den Futterkörper abzustützen, wobei das Federglied dem Stellring ein axiales Verschiebungsspiel gegenüber dem Futterkörper ermöglicht.

Im folgenden wird die Erfindung an in der Zeichnung dargestellten Ausführungsbeispielen näher erläutert; es zeigen:
- Fig. 1: ein Bohrfutter nach der Erfindung in einer ersten Ausführungsform, teils in Seitenansicht, teils in einem Axialschnitt,
- Fig. 2: das den Lagerspalt mit dem Kugellager zeigende Detail aus Fig. 1 in vergrößerter Darstellung,
- Fig. 3: den Gegenstand der Fig. 2 in einer anderen Ausführungsform des Bohrfutters,
- Fig. 4: eine zweite Ausführungsform des erfindungsgemäßen Bohrfutters in einer der Fig. 1 entsprechenden Darstellung,
- Fig. 5: den Schnitt V - V in Fig. 4,
- Fig. 6: den Schnitt VI - VI in Fig. 4,
- Fig. 7: den Schnitt VII - VII in Fig. 4,
- Fig. 8: ein Detail aus Fig. 4 in einem anderen Betriebszustand des Bohrfutters, und
- Fig. 9: das Detail IX - IX aus Fig. 8 in vergrößerter Darstellung,
- Fig. 10: eine weitere Ausführungsform des erfindungsgemäßen Bohrfutters in einer den Fig. 1 und 4 entsprechenden Darstellung,
- Fig. 11: den Schnitt XI - XI in den Fig. 10, 13 und 14,
- Fig. 12: den Schnitt XII - XII in den Fig. 10 und 13, und zwar in den Teilfig. 12 a) und 12 b) in verschiedenen Ausführungsformen,
- Fig. 13: eine vierte Ausführungsform eines Bohrfutters nach der Erfindung in der den Fig. 1, 4 und 10 entsprechenden Darstellung, und
- Fig. 14: eine nochmals andere Ausführungsform des erfindungsgemäßen Bohrfutters in der Darstellung gemäß Fig. 13.

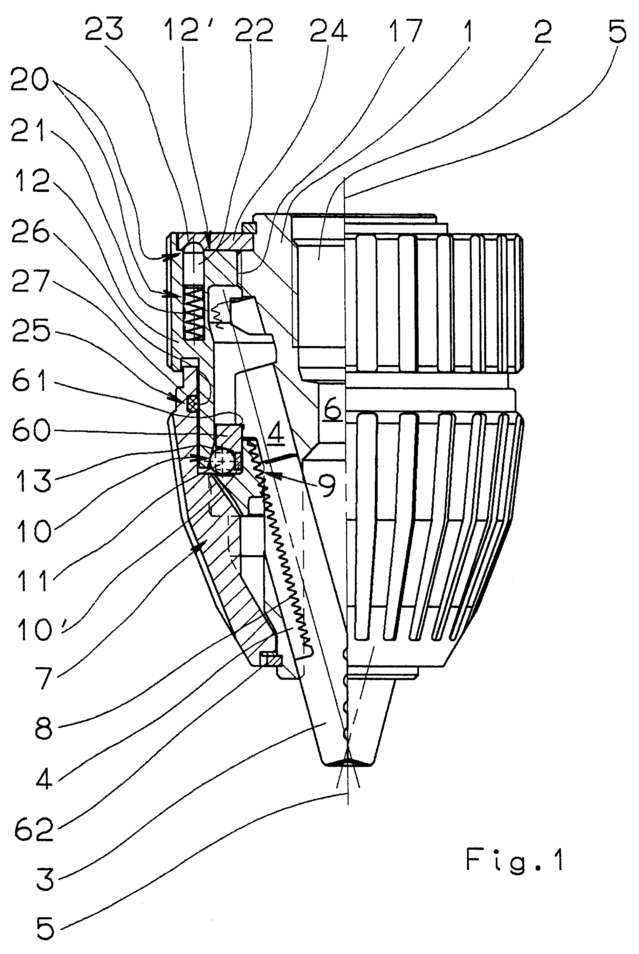

Die in der Zeichnung dargestellten Schlagbohrfutter besitzen einen Futterkörper 1, der zum Anschließen an eine selbst nicht dargestellte Bohrspindel mit einer Gewindeaufnahme 2 versehen ist. Die Futterbacken 3, die zwischen sich eine Aufnahme für den ebenfalls nicht dargestellten Bohrer bilden, sind in Bohrungen 4 verschiebbar geführt, die geneigt zur Futterachse 5 im Futterkörper 1 verlaufen. Zwischen der Aufnahme 2 für die Bohrspindel und der von den Futterbacken 3 gebildeten Aufnahme für den Bohrer ist im Futterkörper 1 ein Durchbruch 6 vorgesehen, durch den hindurch die Schlagwirkung eines in der Bohrspindel vorhandenen Döppers unmittelbar auf den zwischen den Futterbacken 3 gehaltenen Bohrer übertragen werden kann. Ein zur Futterachse 5 konzentrischer Stellring 7 ist drehbar am Futterkörper 1 gelagert. Die Futterbacken 3 greifen mit einer Verzahnung 8 in ein entsprechend der Neigung der Führungsbohrungen 4 konisches Stellgewinde 9 am Stellring 7, so daß sich beim Verdrehen des Stellrings 7 die Futterbacken 3 zentrisch zur Futterachse 5 verschieben. Der Stellring 7 ist in Richtung zur Bohrspindel hin über ein Kugellager 10 axial gegen den Futterkörper 1 abgestützt, wobei die Kugeln 11 in einem nur in Fig. 1 bei 10' dargestellten Kugelkäfig geführt sein können. Weiter ist ein zur Futterachse 5 konzentrischer und um die Futterachse drehbarer Klemmring 12 vorgesehen, der eine die Kugeln 11 des Kugellagers 10 führende Laufläche 13 besitzt. Die Kugeln 11 laufen in einem Lagerspalt 14, den eine relativ zum Stellring 7 feste Ringfläche 15 und eine relativ zum Futterkörper 1 feste Ringfläche 16 zwischen sich bilden. Diese beiden Ringflächen 15, 16 liegen sich axial gegenüber, begrenzen also in axialer Richtung den Lagerspalt 14. Mindestens eine der beiden Ringflächen, in den Ausführungsbeispielen die relativ zum Futterkörper 1 feste Ringfläche 16, ist als eine mit der Futterachse 5 konzentrische Kegelfläche ausgebildet, so daß sich der Querschnitt des Lagerspalts 14, gesehen also im Axialschnitt des Bohrfutters, radial von innen nach außen axial erweitert. Die Lauffläche 13 des Klemmrings 12 umgibt den Lagerspalt 14 radial außen, so daß die Kugeln 10 zusätzlich radial von außen her an der ebenfalls als Kegelfläche ausgebildeten Lauffläche 13 des Klemmrings 12 abgestützt sind. Der Klemmring 12 ist in einem mit der Futterachse 5 koaxialen Klemmgewinde 17 verdrehbar und durch Verdrehen im Klemmgewinde 17 axial relativ zu den Kugeln 10 verstellbar.

Im Ausführungsbeispiel nach den Fig. 1 bis 3 ist das Klemmgewinde 17 am Futterkörper 1 ausgebildet. Der Gewindesinn ist so gewählt, daß der Klemmring 12 beim Verdrehen in der dem Öffnen des Bohrfutters entsprechenden Drehrichtung des Stellrings 7 eine Axialverstellung erfährt, bei der die Lauffläche 13 des Klemmrings 12 die Kugeln 10 im Lagerspalt 14 radial einwärts verstellt, so daß der Stellring 7 und mit ihm die Futterbacken 3 axial nach vorn zum Bohrer hin gedrückt werden. Im Ausführungsbeispiel ist die Anordnung so gewählt, daß der Klemmring 12 beim Verdrehen in der dem Öffnen des Bohrfutters entsprechenden Drehrichtung des Stellrings 7 sich axial nach vorn in Richtung zum Bohrer hin verstellt und daß sich entsprechend die kegelige Lauffläche 13 des Klemmrings 12 nach hinten in Richtung zur Bohrspindel hin verengt. - Weiter ist bei der Ausführungsform nach den Fig. 1 bis 3 zwischen dem Klemmring 12 und dem Futterkörper 1 eine Rasteinrichtung 20 vorgesehen, die über in Drehrichtung des Klemmrings 12 aufeinander folgende Raststellungen verfügt. Diese Rasteinrichtung besteht aus einem im Klemmring 12 axial unter der Kraft einer Rastfeder 21 verstellbaren, stiftförmigen Rastglied 22, das in Rastausnehmungen 23 eingreift, die längs eines Kreises in einer Ringscheibe 24 vorgesehen sind, welche ihrerseits undrehbar und unverschiebbar fest am Futterkörper 1 angeordnet ist und den Klemmring 12 an einer rückwärtigen, der Bohrspindel zugewandten Stirnfläche 19 radial übergreift. Die zum Lösen der Raststellungen führenden Drehmomente können in entgegengesetzten Drehrichtungen des Klemmrings 12 verschieden groß sein, insbes. sollte das Drehmoment beim Verdrehen des Klemmrings 12 in der dem Öffnen des Bohrfutters entsprechenden Drehrichtung des Stellrings 7 kleiner sein als umgekehrt. Auf einfachste Weise kann dies dadurch erreicht werden, daß die Rastausnehmungen 23 randseitig in der dem Öffnen des Bohrfutters entsprechenden Drehrichtung des Stellring 7 angeschrägt sind. Durch diese Rasteinrichtung 20 wird erreicht, daß sich der Klemmring 12 gegenüber dem Futterkörper 1 nicht verdreht, wenn bei offenem Bohrfutter der Stellring 7 verdreht wird, um beispielsweise den Spanndurchmesser zu ändern. - Im übrigen ist beim Ausführungsbeispiel nach den Fig. 1 bis 3 zwischen dem Klemmring 12 und dem Stellring 7 eine beide Ringe 7, 12 in Drehrichtung miteinander kraftschlüssig verbindende Kupplung 25 vorgesehen, die von einem reibungsschlüssigen O-Ring 26 gebildet ist, der in einer Ringnut 27 am Stellring 7 liegt und dem Klemmring 12 reibschlüssig anliegt. Das von dieser Kupplung 25 maximal übertragbare Drehmoment sollte der Größe nach zwischen den beiden Drehmomenten liegen, die zum Öffnen der Rasteinrichtung 20 in der einen oder anderen Drehrichtung des Klemmrings 12 erforderlich sind.

Die Funktionsweise dieses Bohrfutters nach den Fig. 1 bis 3 läßt sich kurz wie folgt beschreiben: Zum Spannen wird das Bohrfutter mit der einen Hand am Stellring 7, mit der anderen Hand am Klemmring 12 erfaßt. Der Stellring 7 wird im Sinne des Schließens des Bohrfutters verdreht, bis sich die Futterbacken 3 am einzuspannenden Bohrerschaft anlegen und sich der Stellring 7 nicht mehr weiter gegenüber dem Futterkörper 1 verdrehen läßt. In diesem Zustand öffnet sich die Rasteinrichtung 20, so daß sich nun der Klemmring 12 in der entgegengesetzten Drehrichtung gegenüber dem Futterkörper 1 und dadurch im Klemmgewinde 17 axial nach vorn verstellt und über seine Lauffläche 13 die Kugeln 11 unter Erhöhung der Spannkraft radial tiefer in den Lagerspalt 14 hineindrückt. - Zum Öffnen des gespannten Bohrfutters sind die Drehrichtungen umgekehrt, wobei aber zunächst der Stellring 7 im Stellgewinde 9 mit den Futterbacken 3 so verspannt ist, daß sich nur der Klemmring 12 gegenüber dem Futterkörper 1 verdreht und axial zurückverstellt. Dadurch löst sich der Spannzustand des Bohrfutters, bis sich auch der Stellring 7 drehen läßt, während dabei der Klemmring 12 durch die Rasteinrichtung 20 am Drehen relativ zum Futterkörper 1 gehindert ist. Sollte sich im Spannzustand des Bohrfutters während des Bohrbetriebs ein selbsttätiges Verdrehen des Stellrings 7 im Öffnungssinn ergeben, führt die über die Kupplung 20 erfolgende Drehmitnahme des Klemmrings 12 zu dessen das Bohrfutter nachspannender Axialverstellung.

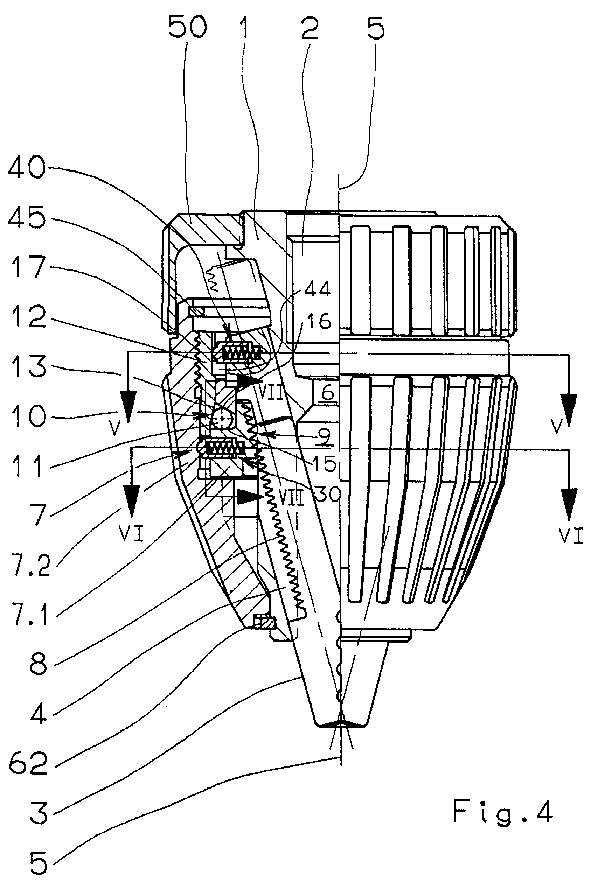

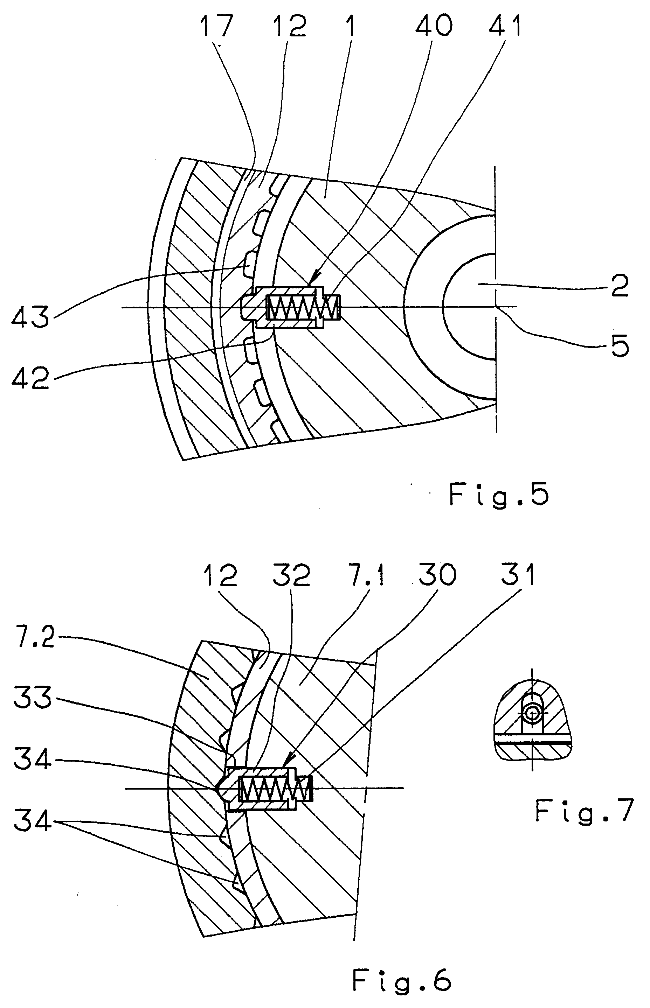

Im Ausführungsbeispiel nach den Fig. 4 bis 14 ist das Klemmgewinde 17 so angeordnet, daß eine Betätigung des Stellrings 7 automatisch zu einer dem jeweiligen Betriebszustand des Bohrfutters entsprechenden selbsttätigen Verstellung des Klemmrings 12 führt. Dazu besteht zunächst der Stellring 7 aus einem das Stellgewinde 9 und die Ringfläche 15 für die Kugeln 11 tragenden Gewindering 7.1 und aus einer Stellhülse 7.2. Der Gewindering 7.1 und die Stellhülse 7.2 sind gegeneinander verdrehbar und axial unverschiebbar miteinander verbunden. Außerdem sind sie in Drehrichtung durch eine erste Rasteinrichtung 30 mit in Drehrichtung aufeinander folgenden Raststellungen miteinander gekuppelt. Der Gewindesinn des Klemmgewindes 17 ist so gewählt, daß der Klemmring 12 beim Verdrehen der Stellhülse 7.2 gegenüber dem Gewindering 7.1 in der dem Schließen des Bohrfutters entsprechenden Drehrichtung eine Axialverstellung erfährt, bei der die Lauffläche 13 des Klemmrings 12 die Kugeln 11 im Lagerspalt 14 radial einwärts verstellt. Auch hier geschieht dies in der Weise, daß der Klemmring 12 beim Verdrehen der Stellhülse 7.2 gegenüber dem Gewindering 7.1 in der dem Schließen des Bohrfutters entsprechenden Drehrichtung sich axial nach vorn in Richtung zum Bohrer hin verstellt und sich entsprechend die kegelige Lauffläche 13 des Klemmrings 12 nach hinten in Richtung zur Bohrspindel hin verengt. Die erste Rasteinrichtung 30 umfaßt ein unter der Kraft einer Rastfeder 31 verstellbares Rastglied 32 in Gestalt eines Stiftes oder einer Kugel, das in Rastausnehmungen 34 eingreift, die in Umfangsrichtung verteilt auf der Innenseite der Stellhülse 7.2 oder einer Planfläche des Gewinderings 7.1 angeordnet sind, je nach dem das Rastglied 32 radial oder axial verstellbar und im Gewindering oder in der Stellhülse vorgesehen ist.

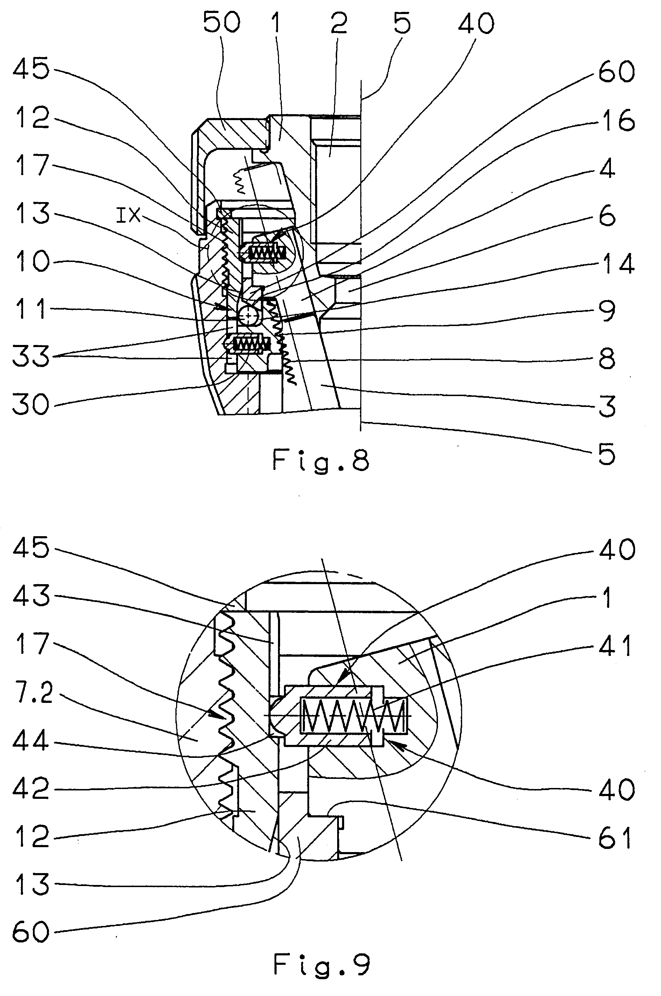

Im Ausführungsbeispiel nach den Fig. 4 bis 9 ist der Klemmring 12 undrehbar und axial verschiebbar mit dem Gewindering 7.1 verbunden. Das Klemmgewinde 17 ist an der Stellhülse 7.2 vorgesehen. Das als radialer Stift ausgebildete, im Gewindering 7.1 angeordnete Rastglied 32 greift durch einen axialen Schlitz 33 im Klemmring 12 hindurch, was die Verdrehungssicherheit von Gewindering 7.1 und Klemmring 12 gegeneinander ergibt. Zwischem dem Klemmring 12 und dem Futterkörper 1 ist eine zweite Rasteinrichtung 40 mit ebenfalls in Drehrichtung aufeinander folgenden Raststellungen vorgesehen. Diese Raststellungen sind unabhängig von der Axialstellung des Klemmrings und sind nur in einer axial rückwärtigen, in Richtung zur Bohrspindel hin liegenden und in den Fig. 8 und 9 dargestellten Endstellung des Klemmrings 12 aufgehoben. Dies wird im einzelnen dadurch erreicht, daß die zweite Rasteinrichtung 40 einen im Futterkörper 1 radial unter der Kraft einer Rastfeder 41 verstellbaren Raststift 42 aufweist, der in auf der Innenseite des Klemmrings 12 über den Umfang verteilt angeordnete Rastausnehmungen 43 eingreift, die jeweils als im wesentlichen axial über den entsprechenden Verstellbereich des Klemmrings 12 verlaufende Rillen ausgebildet sind und am vorderen, in Richtung zum Bohrer hin liegenden Ende in eine im Klemmring 12 ausgebildete Umfangsnut 44 münden, die in der hinteren Endstellung des Klemmrings 12 entsprechend der Darstellung in den Fig. 8 und 9 den Raststift 42 aufnimmt. Die Stellhülse 7.2 ist mit einem Anschlagring 45 versehen, an dem der Klemmring 12 in seiner hinteren Endstellung axial zur Anlage kommt, wie es in Fig. 8 dargestellt ist. Die Rasteinrichtungen 30, 40 sind im übrigen so ausgebildet, daß das für die zweite Rasteinrichtung 40 erforderliche Lösemoment größer als für die erste Rasteinrichtung 30 ist.

Die Funktionsweise des Bohrfutters nach den Fig. 4 bis 9 läßt sich kurz wie folgt beschreiben: Das Bohrfutter wird zum Spannen mit der einen Hand an der Stellhülse 7.2, mit der anderen Hand an einem undrehbar und unverschiebbar fest mit dem Futterkörper 1 verbundenen Haltering 50 erfaßt und die Stellhülse 7.2 im Sinne eines Schließens des Bohrfutters verdreht, bis sich die Futterbacken 3 am Schaft des einzuspannenden Bohrers anlegen, der Gewindering 7.1 sich im Stellgewinde 9 gegenüber den Futterbacken 3 verspannt und daher nicht mehr weiter verdrehbar ist. Dabei hat sich der Klemmring 12 mit dem Gewindering 7.1 mitgedreht. Ist dieser nicht mehr weiter verdrehbar, kann sich auch der Klemmring 12 nicht mehr weiter drehen. Daher rastet die erste Rasteinrichtung 30 aus, so daß nun die Stellhülse 7.2 gegenüber dem feststehenden Gewindering 7.1 und dem feststehenden Klemmring 12 weiter verdrehbar ist und sich der Klemmring 12 im Klemmgewinde 17 axial vorverstellt und dadurch unter Spannkrafterhöhung die Kugeln 11 radial tiefer in den Lagerspalt 14 drückt. Der gespannte Endzustand des Bohrfutters ist in Fig. 4 dargestellt. Zum Lösen des gespannten Bohrfutters wird die Stellhülse 7.2 entgegengesetzt gedreht, wobei sich der mit den Futterbacken noch verspannte Gewindering 7.1 nicht mitdreht, so daß auch der Klemmring 12 am Mitdrehen gehindert und somit im Klemmgewinde 17 axial rückwärts verstellt wird, was zum Abbau der Spannkraft führt, so daß schließlich auch der Gewindering 7.1 über die erste Rasteinrichtung 30 von der Stellhülse 7.2 mitgenommen wird. Ist das Futter offen, drehen sich, über die erste Rasteinrichtung 30 miteinander verbunden, die Stellhülse 7.2 und der Gewindering 7.1 sowie der Klemmring 12 stets gemeinsam. - In der Praxis kann der Fall eintreten, daß sich der Bohrer während des Bohrbetriebs zwischen den Futterbacken 3 freischlägt, wodurch die Verspannung des Gewinderings 7.1 mit den Futterbacken 3 im Stellgewinde 9 aufgehoben wird. Um dennoch sicher zu stellen, daß sich beim Öffnen des Bohrfutters zunächst der Klemmring 12 in die aus Fig. 8 und 9 ersichtliche Endstellung zurückstellt, ist die zweite Rasteinrichtung 40 vorgesehen, die den Klemmring 12 solange am Mitdrehen hindert, bis der Raststift 42 der in die Umfangsnut 44 eintritt und erst jetzt den Klemmring 12 zur Drehmitnahme durch die Stellhülse 7.2 freigibt.

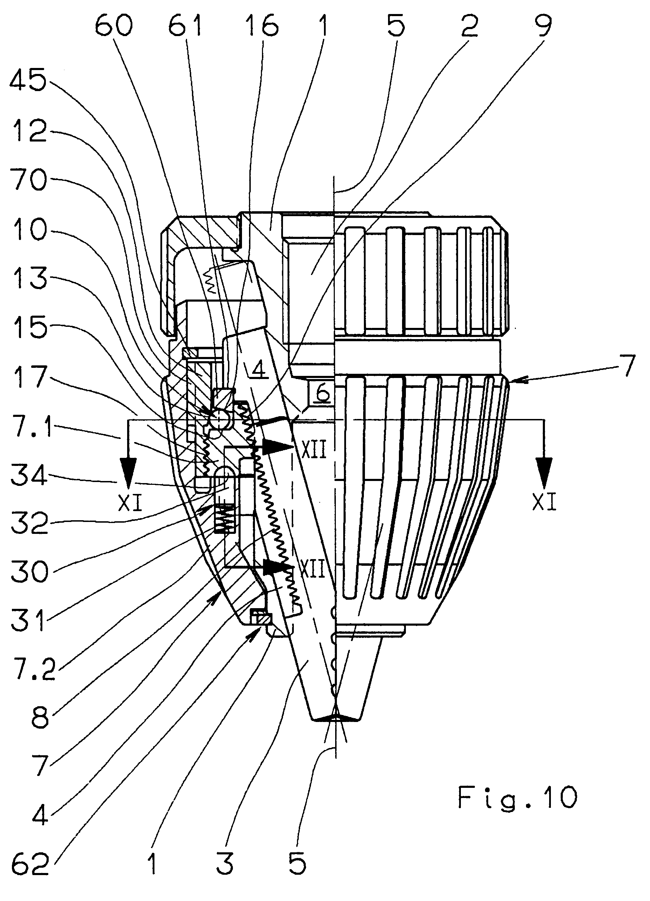

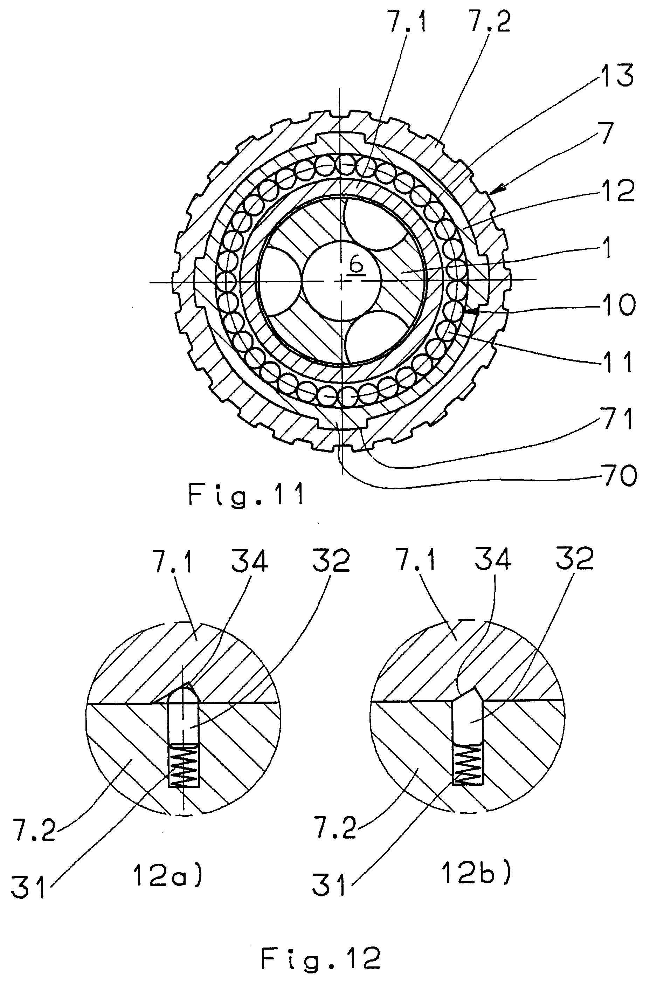

Bei den Ausführungsbeispielen nach den Fig. 10 bis 14 ist der Klemmring 12 undrehbar und axial verschiebbar mit der Stellhülse 7.2 verbunden, wozu der Klemmring 12 mit Axialrippen 70 versehen ist, die in entsprechenden Axialnuten 71 auf der Innenseite der Klemmhülse 7.2 formschlüssig geführt sind. Wieder begrenzt ein Widerlager 45 Axialverstellungen des Klemmrings 12 zu weit in Richtung zur Bohrspindel hin. Die erste Rasteinrichtung 30 bildet einen in Fig. 12 dargestellten Rasteingriff, der in der dem Schließen und Spannen entsprechenden Drehrichtung des Stellrings 7, in Fig. 12 also nach rechts, schwerer zu öffnen ist als in der entgegen gesetzten Drehrichtung, in Fig. 12 also nach links. Erreicht wird dies durch in beiden Richtungen unterschiedliche Steilheiten der die Rastausnehmungen 34 bzw. den Kopf des Rastgliedes 32 bildenden Rastflächen.

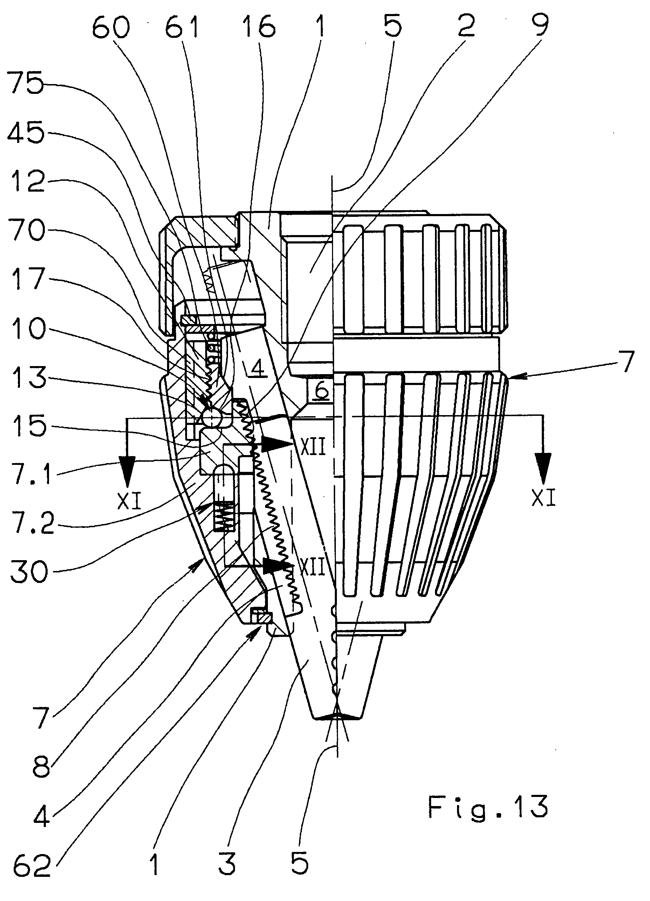

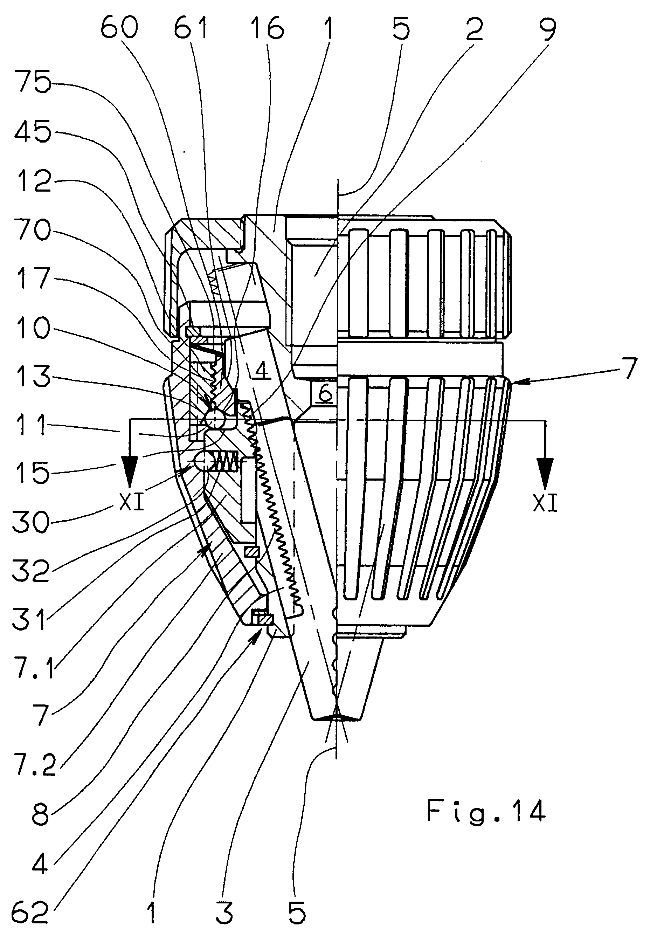

Im einzelnen ist in Fig. 10 das Klemmgewinde 17 am Gewindering 7.1 vorgesehen. Im Ausführungsbeispiel nach den Fig. 13 und 14 befindet sich dagegen das Klemmgwinde 17 an einem Lagerring 60, der die relativ zum Futterkörper 1 feste Ringfläche 16 trägt. Der Lagerring 60 ist um die Futterachse 5 drehbar und axial verschiebbar am Futterkörper 1 geführt. Axial rückwärts, d. h. zur Bohrspindel hin, kann sich der Lagerring 60 gegen eine Ringschulter 61 des Futterkörpers 1 abstützen, und zwar gegen die Kraft einer Rückstellfeder 75, die als Druckfeder einerseits am Lagerring 60 und andererseits am Widerlagerring 45 der Stellhülse 7.2 abgestützt ist. Diese Rückstellfeder 75 ist in Fig. 13 als Schraubenfeder, in Fig. 14 als Tellerfeder ausgebildet. Die Ringschulter 61 und die ihr im Fall seiner Abstützung anliegende Ringfläche des Lagerrings 60 sind konisch mit sich zum Bohrer hin verjüngender Kegelfläche ausgebildet.

Ist in den Fällen der Fig. 13 und 14 das Bohrfutter offen, so hebt die Rückstellfeder 75 den Lagerring 60 so weit von der Ringschulter 61 ab, daß er sich gegenüber dem Futterkörper 1 verdrehen und an der Drehung des Stellrings 7 und des Klemmrings 12 teilnehmen kann, wenn der Stellring 7 verdreht wird, um den Spanndurchmesser des Bohrfutters zu ändern. Gegenseitige Verstellungen zwischen dem Lagerring 60 und dem Klemmring 12 im Klemmgewinde 17 finden dabei nicht statt. Wird aber das Bohrfutter geschlossen, drückt der Gewindering 7.1 über das Kugellager 10 den Lagerring 60 axial gegen die Ringschulter 61, so daß infolge des zwischen beiden entstehenden Reibungsschlusses der Lagerring 60 sich nicht mehr weiter gegenüber dem Futterkörper 1 verdrehen kann. Beim weiteren Verdrehen der Stellhülse 7.2 im Sinne des Schließens des Bohrfutters öffnet sich die Rasteinrichtung 30 und der von der Stellhülse 7.2 weiter mitgenommene Klemmring 12 verdreht sich im Klemmgewinde 17 gegenüber dem an der Ringschulter 61 durch Kraftschluß gegen Drehen gesicherten Lagerring 60, so daß sich der Klemmring 12 axial verstellt und die gewünschte Spannkrafterhöhung des Bohrfutters erzeugt.

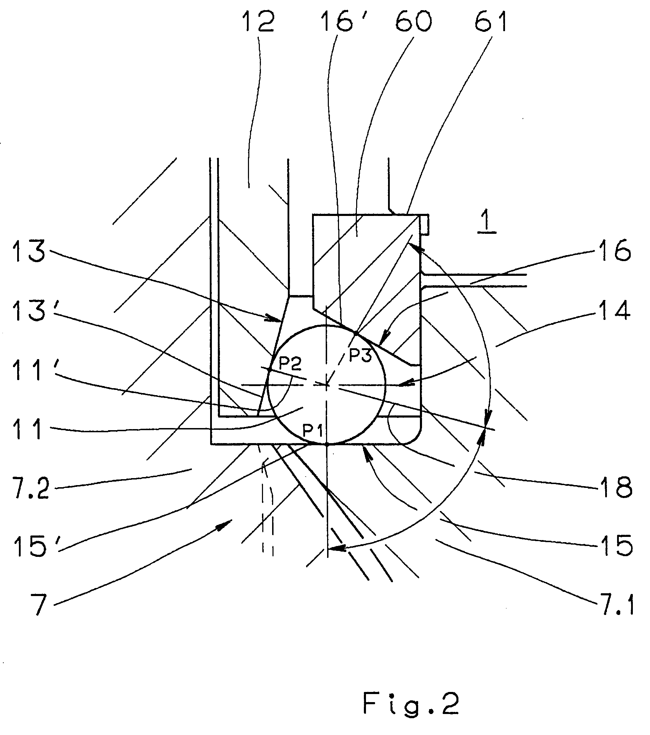

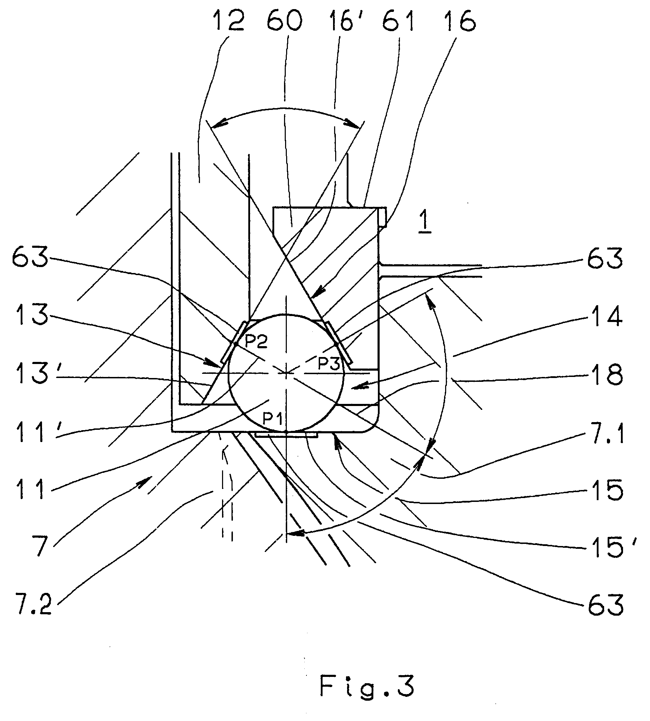

Die Lagerverhältnisse sind im einzelnen anhand der Fig. 2 und 3 des Ausführungsbeispiels gemäß Fig. 1 dargestellt, gelten aber im gleicher Weise auch für die Ausführungsformen nach den Fig. 4 bis 14. Im Querschnitt des Lagerspalts 14 gesehen, steht nämlich die Mantellinie 13' der Lauffläche 13 des Klemmrings 12 senkrecht auf der Winkelhalbierenden 18 zwischen den Mantellinien 15', 16' beider den Lagerspalt 14 axial begrenzenden Ringflächen 15, 16. Daher sind die beiden Berührungspunkte P1, P3, in welchen die Kugeln 11 jeweils an der einen und der anderen Ringfläche 15, 16 anliegen, in Umfangsrichtung der Kugel 11 gleich weit von ihrem Berührungspunkt P2 mit der Lauffläche 13 des Klemmrings 12 entfernt. Dieser Berührungspunkt P2 liegt somit in der Kugelachse 11', um die sich die Kugel 11 dreht, wenn sie im Lagerspalt 14 an den beiden Ringflächen 15, 16 abläuft. Insbes. besteht die in Fig. 3 gezeigte Möglichkeit, daß die Winkelhalbierende 18 mit den Mantellinien 15', 16' der Ringflächen 15, 16 einen Winkel von 30° einschließt, was zur Folge hat, daß alle Berührungspunkte P1, P2, P3 der Kugel 11 mit den drei Ringflächen 13, 15, 16 denselben Abstand voneinander haben. Der Lagerspalt 14 bildet dann im Querschnitt die geometrische Figur eines gleichseitigen Dreiecks. - Die relativ zum Stellring 7 feste Ringfläche 15 ist in den Ausführungsbeispielen eine ebene Fläche, die senkrecht zur Futterachse 5 liegt. Die relativ zum Futterkörper 1 feste Ringfläche 16 ist am Lagerring 60 ausgebildet, der an der Ringschulter 61 des Futterkörpers 1 gehalten ist.

Damit durch den Klemmring 12 eine Spannkrafterhöhung erhalten werden kann, bedarf es für den Stellring 7 eines wenn auch nur sehr geringen axialen Spieles. Im Hinblick auf dieses Axialspiel empfiehlt es sich, den Stellring 7 axial nach vorn in Richtung zum Bohrer hin über ein Federglied 62 gegen den Futterkörper 1 abzustützen, wobei dieses Federglied 62 beispielsweise als Tellerfeder ausgebildet sein kann.

Im übrigen besteht die Möglichkeit, bei den Ringflächen 15, 16 und der Lauffläche 13 in wahlweise einer oder zwei dieser Flächen oder in allen drei Flächen zugleich in Umfangsrichtung aufeinander folgende axiale Vertiefung und Erhöhungen vorzusehen, wie sie in Fig. 3 bei jeweils 63 angedeutet sind. Solche Vertiefungen und Erhöhungen können ebenfalls zur Erhöhung der Spannkraft beitragen und ein selbsttätiges Lösen des Bohrfutters im Bohrbetrieb erschweren.

## Patentansprüche

1. Bohrfutter, insbesondere zum Schlagbohren, mit einem an eine Bohrspindel anschließbaren Futterkörper (1), mit zwischen sich eine Aufnahme für einen Bohrer bildenden Futterbacken (3), die in geneigt zur Futterachse (5) im Futterkörper (1) verlaufenden Bohrungen (4) verschiebbar geführt sind, ferner mit einem am Futterkörper (1) drehbar gelagerten, beim Verdrehen die Futterbacken (3) zentrisch zur Futterachse (5) verschiebenden Stellring (7), wobei die Futterbacken (3) mit einer Verzahnung (8) in ein konisches Stellgewinde (9) am Stellring (7) eingreifen und der Stellring (7) bohrspindelseitig über ein Kugellager (10) axial gegen den Futterkörper (1) abgestützt ist, und mit einem konzentrisch zur Futterachse (5) drehbaren Klemmring (12) mit einer die Kugeln (11) des Kugellagers (10) führenden Lauffläche (13), dadurch gekennzeichnet, daß die Kugeln (11) des Kugellagers (10) in einem Lagerspalt (14) laufen, den eine relativ zum Stellring (7) feste Ringfläche (15) und eine relativ zum Futterkörper (1) feste Ringfläche (16) zwischen sich bilden, wobei sich die Ringflächen (15, 16) axial gegenüber liegen und mindestens eine der Ringflächen (16) als mit der Futterachse (5) konzentrische Kegelfläche ausgebildet ist, so daß sich der Querschnitt des Lagerspalts (14) radial von innen nach außen erweitert, daß ferner die Lauffläche (13) des Klemmrings (12) den Lagerspalt (14) radial außen umgibt, so daß die Kugeln (11) zusätzlich radial von außen her an der ebenfalls als Kegelfläche ausgebildeten Lauffläche (13) des Klemmrings (12) abgestützt sind, und daß der Klemmring (12) in einem mit der Futterachse (9) koaxialen Klemmgewinde (17) verdrehbar und durch Verdrehen im Klemmgewinde (17) axial relativ zu den Kugeln (11) verstellbar ist.

2. Bohrfutter nach Anspruch 1, dadurch gekennzeichnet, daß das Klemmgewinde (17) am Futterkörper (1) vorgesehen und der Gewindesinn so gewählt ist, daß der Klemmring (12) beim Verdrehen in der dem Öffnen des Bohrfutters entsprechenden Drehrichtung des Stellrings (7) eine Axialverstellung erfährt, bei der die Lauffläche (13) des Klemmrings (12) die Kugeln (11) im Lagerspalt (14) radial einwärts verstellt.

3. Bohrfutter nach Anspruch 2, dadurch gekennzeichnet, daß der Klemmring (12) beim Verdrehen in der dem Öffnen des Bohrfutters entsprechenden Drehrichtung des Stellrings (7) sich axial nach vorn in Richtung zum Bohrer hin verstellt, und daß sich die kegelige Lauffläche (13) des Klemmrings (12) nach hinten in Richtung zur Bohrspindel hin verengt.

4. Bohrfutter nach Anspruch 2 oder 3, dadurch gekennzeichnet, daß zwischen dem Klemmring (12) und dem Futterkörper (1) eine Rasteinrichtung (20) mit in Drehrichtung des Klemmrings (12) aufeinander folgenden Raststellungen vorgesehen ist.

5. Bohrfutter nach Anspruch 4, dadurch gekennzeichnet, daß die zum Lösen der Raststellungen führenden Drehmomente in entgegen gesetzten Drehrichtungen des Klemmrings (12) verschieden sind, insbesondere beim Verdrehen des Klemmrings (12) in der dem Öffnen des Bohrfutters entsprechenden Drehrichtung des Stellrings (7) kleiner als umgekehrt.

6. Bohrfutter nach Anspruch 4 oder 5, dadurch gekennzeichnet, daß die Rasteinrichtung (20) ein im Klemmring (12) axial unter der Kraft einer Rastfeder (21) verstellbares Rastglied (22) aufweist, das in Rastausnehmungen (23) eingreift, die längs eines Kreises in einer Ringscheibe (24) vorgesehen sind, die fest am Futterkörper (1) angeordnet ist und den Klemmring (12) an einer rückwärtigen, der Bohrspindel zugewandten Stirnfläche (12') radial übergreift.

7. Bohrfutter nach Anspruch 6, dadurch gekennzeichnet, daß die Rastausnehmungen (23) randseitig in der dem Öffnen des Bohrfutters entsprechenden Drehrichtung des Stellrings (7) angeschrägt sind.

8. Bohrfutter nach einem der Ansprüche 2 bis 7, dadurch gekennzeichnet, daß zwischen dem Klemmring (12) und dem Stellring (7) eine beide in Drehrichtung miteinander kraftschlüssig verbindende Kupplung (25) vorgesehen ist.

9. Bohrfutter nach Anspruch 8, dadurch gekennzeichnet, daß die Kupplung (25) von einem reibungsschlüssigen O-Ring (26) gebildet ist, der in einer Ringnut (27) am Stellring (7) oder am Klemmring (12) gehalten ist.

10. Bohrfutter nach Anspruch 1, dadurch gekennzeichnet, daß der Stellring (7) aus einem das Stellgewinde (9) und die Ringfläche (15) für die Kugeln (11) tragenden Gewindering (7.1) und aus einer Stellhülse (7.2) besteht, die gegeneinander verdrehbar und axial unverschiebbar verbunden sowie in Drehrichtung durch eine erste Rasteinrichtung (30) mit in Drehrichtung aufeinander folgenden Raststellungen miteinander gekuppelt sind, wobei durch Verdrehen der Stellhülse (7.2) relativ zum Gewindering (7.1) bei offener Rasteinrichtung (30) der Klemmring (12) im Klemmgewinde (17) verdreht wird, dessen Gewindesinn so gewählt ist, daß der Klemmring (12) beim Verdrehen der Stellhülse (7.2) gegenüber dem Gewindering (7.1) in der dem Schließen des Bohrfutters entsprechenden Drehrichtung eine Axialverstellung erfährt, bei der die Lauffläche (13) des Klemmrings (12) die Kugeln (11) im Lagerspalt (14) radial einwärts verstellt.

11. Bohrfutter nach Anspruch 10, dadurch gekennzeichnet, daß der Klemmring (12) beim Verdrehen der Stellhülse (7.2) gegenüber dem Gewindering (7.1) in der dem Schließen des Bohrfutters entsprechenden Drehrichtung sich axial nach vorn in Richtung zum Bohrer hin verstellt, und daß sich die kegelige Lauffläche (13) des Klemmrings (12) nach hinten in Richtung zur Bohrspindel hin verengt.

12. Bohrfutter nach Anspruch 10 oder 11, dadurch gekennzeichnet, daß der Klemmring (12) undrehbar und axial verschiebbar mit dem Gewindering (7.1) verbunden ist, daß das Klemmgewinde (17) an der Stellhülse (7.2) vorgesehen ist und daß die erste Rasteinrichtung (30) einen im Gewindering (7.1) radial unter der Kraft einer Rastfeder (31) verstellbaren Raststift (32) aufweist, der durch einen axialen Schlitz (33) im Klemmring (12) hindurch in Rastausnehmungen (34) eingreift, die in Umfangsrichtung verteilt auf der Innenseite der Stellhülse (7.2) angeordnet sind.

13. Bohrfutter nach einem der Ansprüche 10 bis 12, dadurch gekennzeichnet, daß zwischen dem Klemmring (12) und dem Futterkörper (1) eine zweite Rasteinrichtung (40) mit in Drehrichtung aufeinander folgenden Raststellungen vorgesehen ist, wobei die Raststellungen unabhängig von der Axialstellung des Klemmrings (12) sind und nur in einer axial rückwärtigen, in Richtung zur Bohrspindel hin liegenden Endstellung des Klemmrings (12) aufgehoben sind.

14. Bohrfutter nach Anspruch 13, dadurch gekennzeichnet, daß die zweite Rasteinrichtung (40) einen im Futterkörper (1) radial unter der Kraft einer Rastfeder (41) verstellbaren Raststift (42) aufweist, der in auf der Innenseite des Klemmrings (12) über den Umfang verteilt angeordnete Rastausnehmungen (43) eingreift, die jeweils als im wesentlichen axial verlaufende Rillen ausgebildet sind und am vorderen, in Richtung zum Bohrer hin liegenden Ende in eine im Klemmring (12) ausgebildete Umfangsnut (44) münden, die in der hinteren Endstellung des Klemmrings (12) den Raststift (42) aufnimmt.

15. Bohrfutter nach Anspruch 13 oder 14, dadurch gekennzeichnet, daß die Stellhülse (7.2) einen Anschlagring (45) aufweist, an dem der Klemmring (12) in seiner hinteren Endstellung axial zur Anlage kommt.

16. Bohrfutter nach Anspruch 10 oder 11, dadurch gekennzeichnet, daß der Klemmring (12) undrehbar und axial verschiebbar mit der Stellhülse (7.2) verbunden und das Klemmgewinde (17) am Gewindeing (7.1) vorgesehen ist.

17. Bohrfutter nach Anspruch 10 oder 11, dadurch gekennzeichnet, daß der Klemmring (12) undrehbar und axial verschiebbar mit der Stellhülse (7.2) verbunden und das Klemmgewinde (17) an einem Lagerring (60) vorgesehen ist, der die relativ zum Futterkörper (1) feste Ringfläche (16) des Lagerspalts (14) trägt, der ferner axial am Futterkörper (1) verschiebbar und drehbar um die Futterachse (5) geführt ist und der axial rückwärts, d. h. in Richtung zur Bohrspindel hin, gegen eine Ringschulter (61) des Futterkörpers (1) abstützbar ist, wobei im an der Ringschulter (61) abgestützten Zustand der Lagerring (60) gegen Drehung gesichert ist, und daß eine Rückstellfeder (75) vorgesehen ist, durch die der Lagerring (60) zur Freigabe seiner Verdrehbarkeit von der Ringschulter (61) axial nach vorn abhebbar ist.

18. Bohrfutter nach Anspruch 17, dadurch gekennzeichnet, daß die Ringschulter (61) und die ihr im abgestützten Zustand anliegende Ringfläche des Lagerrings (60) konisch mit sich axial nach vorn verjüngendem Kegelwinkel ausgebildet sind.

19. Bohrfutter nach Anspruch 17 oder 18, dadurch gekennzeichnet, daß die Rückstellfeder (70) eine einerseits am Lagerring (60), andererseits an einem Widerlager (45) der Stellhülse (7.2) abgestützte Druckfeder ist.

20. Bohrfutter nach einem der Ansprüche 16 bis 19, dadurch gekennzeichnet, daß die erste Rasteinrichtung (30) einen Rasteingriff bildet, der zum Lösen in der dem Schließen des Bohrfutters entsprechenden Drehrichtung ein größeres Drehmoment an der Stellhülse (7.2) erfordert als in der entgegen gesetzten, dem Öffnen des Bohrfutters entsprechenden Drehrichtung.

21. Bohrfutter nach einem der Ansprüche 1 bis 20, dadurch gekennzeichnet, daß, im Querschnitt des Lagerspalts (14) gesehen, die Mantellinie (13') der Lauffläche (13) des Klemmrings (12) senkrecht steht auf der Winkehalbierenden (18) zwischen den Mantellinien (15', 16') beider den Lagerspalt (14) axial begrenzenden Ringflächen (15, 16).

22. Bohrfutter nach Anspruch 21, dadurch gekennzeichnet, daß die Winkelhalbierende (18) mit den Mantellinien (15', 16') der Ringflächen (15, 16) einen Winkel von 30° einschließt.

23. Bohrfutter nach einem der Ansprüche 1 bis 22, dadurch gekennzeichnet, daß die relativ zum Stellring (7) feste Ringfläche (15) in einer zur Futterachse (5) senkrechten Ebene liegt.

24. Bohrfutter nach einem der Ansprüche 1 bis 23, dadurch gekennzeichnet, daß der Stellring (7) axial nach vorn in Richtung zum Bohrer hin über ein Federglied (62) gegen den Futterkörper (1) abgestützt ist.

## Claims

1. A drilling chuck, in particular for hammer drilling, having a chuck body (1) which can be connected to a drilling spindle, chuck jaws (3) which form between them a receiving means for a drill and which are guided displaceably in bores (4) extending inclinedly relative to the chuck axis (5) in the chuck body (1), further having a setting ring (7) which is mounted rotatably on the chuck body (1) and which upon rotation displaces the chuck jaws (3) concentrically with respect to the chuck axis (5), wherein the chuck jaws (3) engage with a tooth arrangement (8) into a conical setting screwthread (9) on the setting ring (7) and the setting ring (7) is axially supported at the drilling spindle side against the chuck body (1) by way of a ball bearing (10), and having a clamping ring (12) which is rotatable concentrically with respect to the chuck axis (5), with a running surface (13) which guides the balls (11) of the ball bearing (10), characterised in that the balls (11) of the ball bearing (10) run in a bearing gap (14) which a ring surface (15) which is fixed relative to the setting ring (7) and a ring surface (16) which is fixed relative to the chuck body (1) form between them, wherein the ring surfaces (15, 16) are in mutually axially opposite relationship and at least one of the ring surfaces (16) is in the form of a conical surface which is concentric with the chuck axis (5) so that the cross-section of the bearing gap (14) increases in a radially outward direction, that in addition the running surface (13) of the clamping ring (12) surrounds the bearing gap (14) radially outwardly so that the balls (11) are additionally supported radially from the outside against the running surface (13) of the clamping ring (12), which is also in the form of a conical surface, and that the clamping ring (12) is rotatable in a clamping screwthread (17) coaxial with the chuck axis (9) and is displaceable axially relative to the balls (11) by rotation in the clamping screwthread (17).

2. A drilling chuck according to claim 1 characterised in that the clamping screwthread (17) is provided on the chuck body (1) and the screwthread direction is so selected that upon rotation in the direction of rotation corresponding to opening of the drilling chuck, of the setting ring (7), the clamping ring (12) experiences axial displacement in which the running surface (13) of the clamping ring (12) displaces the balls (11) radially inwardly in the bearing gap (14).

3. A drilling chuck according to claim 2 characterised in that upon rotation in the direction of rotation corresponding to opening of the drilling chuck, of the setting ring (7), the clamping ring (12) is displaced axially forwardly in a direction towards the drill, and that the conical running surface (13) of the clamping ring (12) constricts rearwardly in a direction towards the drilling spindle.

4. A drilling chuck according to claim 2 or claim 3 characterised in that provided between the clamping ring (12) and the chuck body (1) is a retaining means (20) with retaining positions which occur in succession in the direction of rotation of the clamping ring (12).

5. A drilling chuck according to claim 4 characterised in that the torques, leading to release of the retaining locations, in mutually opposite directions of rotation of the clamping ring (12) are different and in particular are lower upon rotation of the clamping ring (12) in the direction of rotation of the setting ring (7) corresponding to opening of the drilling chuck, than conversely.

6. A drilling chuck according to claim 4 or claim 5 characterised in that the retaining means has a retaining member (22) which is axially displaceable under the force of a retaining spring (21) in the clamping ring (12) and which engages into retaining openings (23) provided along a circle in an annular disc (24) which is fixedly arranged on the chuck body (1) and which engages radially over the clamping ring (12) at a rearward end face (12') which is towards the drilling spindle.

7. A drilling chuck according to claim 6 characterised in that the retaining openings (23) are bevelled at the edge in the direction of rotation of the setting ring (7), corresponding to opening of the drilling chuck.

8. A drilling chuck according to one of claims 2 to 7 characterised in that provided between the clamping ring (12) and the setting ring (7) is a coupling (25) which force-lockingly connects the two together in the direction of rotation.

9. A drilling chuck according to claim 8 characterised in that the coupling (25) is formed by an O-ring (26) which involves frictional contact and which is held in an annular groove (27) on the setting ring (7) or on the clamping ring (12).

10. A drilling chuck according to claim 1 characterised in that the setting ring (7) comprises a screwthreaded ring (7.1) carrying the setting screwthread (9) and the ring surface (15) for the balls (11) and a setting sleeve (7.2), which are mutually rotatably and axially immovably connected and are coupled together in the direction of rotation by a first retaining means (30) with retaining locations which occur in succession in the direction of rotation, wherein by rotation of the setting sleeve (7.2) relative to the screwthreaded ring (7.1) with the retaining means (30) open the clamping ring (12) is rotated in the clamping screwthread (17), the direction of the screwthread of which is so selected that upon rotation of the setting sleeve (7.2) relative to the screwthreaded ring (7.1) in the direction of rotation corresponding to closure of the drilling chuck the clamping ring (12) experiences an axial displacement in which the running surface (13) of the clamping ring (12) displaces the balls (11) radially inwardly in the bearing gap (14).

11. A drilling chuck according to claim 10 characterised in that upon rotation of the setting sleeve (7.2) relative to the screwthreaded ring (7.1) in the direction of rotation corresponding to closure of the drilling chuck the clamping ring (12) is displaced axially forwardly towards the drill, and that the conical running surface (13) of the clamping ring (12) constricts rearwardly in a direction towards the drilling spindle.

12. A drilling chuck according to claim 10 or claim 11 characterised in that the clamping ring (12) is non-rotatably and axially displaceably connected to the screwthreaded ring (7.1), that the clamping screwthread (17) is provided on the setting sleeve (7.2) and that the first retaining means (30) has a retaining pin (32) which is displaceable radially in the screwthreaded ring (7.1) under the force of a retaining spring (31) and which engages through an axial slot (33) in the clamping ring (12) into retaining openings (34) which are arranged distributed in the peripheral direction on the inside of the setting sleeve (7.2).

13. A drilling chuck according to one of claims 10 to 12 characterised in that provided between the clamping ring (12) and the chuck body (1) is a second retaining means (40) with retaining locations which occur in succession in the direction of rotation, wherein the retaining locations are independent of the axial position of the clamping ring (12) and are nullified only in an axially rearward end position of the clamping ring (12), which is in a direction towards the drilling spindle.

14. A drilling chuck according to claim 13 characterised in that the second retaining means (40) has a retaining pin (42) which is displaceable radially in the chuck body (1) under the force of a retaining spring (41) and which engages into retaining openings (43) which are arranged on the inside of the clamping ring (12) distributed over the periphery thereof and which are each in the form of substantially axially extending grooves and open at the front end, which is in a direction towards the drill, into a peripheral groove (44) which is provided in the clamping ring (12) and which accommodates the retaining pin (42) in the rear end position of the clamping ring (12).

15. A drilling chuck according to claim 13 or claim 14 characterised in that the setting sleeve (7.2) has an abutment ring (45) against which the clamping ring (12) comes axially to bear in its rear end position.

16. A drilling chuck according to claim 10 or claim 11 characterised in that the clamping ring (12) is non-rotatably and axially displaceably connected to the setting sleeve (7.2) and the clamping screwthread (17) is provided on the screwthreaded ring (7.1).

17. A drilling chuck according to claim 10 or claim 11 characterised in that the clamping ring (12) is non-rotatably and axially displaceably connected to the setting sleeve (7.2) and the clamping screwthread (17) is provided on a bearing ring (60) which carries the ring surface (16), that is fixed relative to the chuck body (1), of the bearing gap (14), which also is guided axially displaceably on the chuck body (1) and rotatably about the chuck axis (5) and which can be supported axially rearwardly, that is to say in a direction towards the drilling spindle, against an annular shoulder (61) of the chuck body (1), wherein the bearing ring (60) is prevented from rotating in the condition of being supported against the annular shoulder (61), and that there is provided a return spring (75) by which the bearing ring (60), to enable rotatability thereof, can be lifted axially forwardly off the annular shoulder (61).

18. A drilling chuck according to claim 17 characterised in that the annular shoulder (61) and the annular surface of the bearing ring (60), which bears against it in the supported condition, are formed conically with an axially forwardly tapering cone angle.

19. A drilling chuck according to claim 17 or claim 18 characterised in that the return spring (70) is a compression spring which is supported on the one hand on the bearing ring (60) and on the other hand on a support means (45) of the setting sleeve (7.2).

20. A drilling chuck according to one of claims 16 to 19 characterised in that the first retaining means (30) forms a retaining engagement which for release requires a higher level of torque on the setting sleeve (7.2) in the direction of rotation corresponding to closure of the drilling chuck than in the opposite direction of rotation corresponding to opening of the drilling chuck.

21. A drilling chuck according to one of claims 1 to 20 characterised in that, as viewed in cross-section of the bearing gap (14), the directrix (13') of the running surface (13) of the clamping ring (12) is perpendicular to the bisector (18) between the directrices (15', 16') of the two ring surfaces (15, 16) axially delimiting the bearing gap (14).

22. A drilling chuck according to claim 21 characterised in that the bisector (18) includes an angle of 30° with the directrices (15', 16') of the ring surfaces (15, 16).

23. A drilling chuck according to one of claims 1 to 22 characterised in that the ring surface (15) which is fixed relative to the setting ring (7) is disposed in a plane perpendicular to the chuck axis (5).

24. A drilling chuck according to one of claims 1 to 23 characterised in that the setting ring (7) is supported axially forwardly against the chuck body (1) in a direction towards the drill by way of a spring member (62).

## Revendications

1. Mandrin de perçage, notamment pour le perçage à percussion, comportant un corps (1), qui peut être raccordé à une broche de perçage, des mors (3) formant un logement pour un foret et qui sont guidés de manière à être déplaçables dans des perçages (4) inclinés par rapport à l'axe (5) du mandrin dans le corps (1) du mandrin, et comportant en outre une bague de réglage (7), qui est montée de manière à pouvoir tourner sur le corps (1) du mandrin et, lors de la rotation des mors (3) du mandrin, se déplace dans une position centrée sur l'axe (5) du mandrin, les mors (3) du mandrin engrenant par une denture (8) dans un filetage conique de réglage (9) situé sur la bague de réglage (7), et la bague de réglage (7) prenant appui axialement, du côté de la broche de perçage, contre le corps (1) du mandrin au moyen d'un roulement à billes (10), et comportant une bague de serrage (12) qui peut tourner concentriquement par rapport à l'axe (5) du mandrin et possède une surface de roulement (13) qui guide les billes (11) du roulement à billes (10), caractérisé en ce que les billes (11) du roulement à billes (10) circulent dans une fente de palier (14), que forment entre elles une surface annulaire (15) fixe par rapport à la bague de réglage (7) et une surface annulaire (16) fixe par rapport au corps (1) du mandrin, les surfaces annulaires (15,16) étant situées axialement en vis-à-vis et au moins l'une des surfaces annulaires (16) étant agencée sous la forme d'une surface conique et concentrique à l'axe (5) du mandrin, de sorte que la section transversale de la fente de palier (14) s'élargit radialement de l'intérieur vers l'extérieur, qu'en outre la surface de roulement (13) de la bague de serrage (12) entoure radialement vers l'extérieur la fente de palier (14) de sorte que les billes (11) sont supportées en outre radialement à partir de l'extérieur, sur la surface de roulement (13) de la bague de serrage (12), qui est agencée également sous la forme d'une surface conique, et que la bague de serrage (12) peut tourner dans un filetage de serrage (17) qui est coaxial à l'axe (9) du mandrin et peut être déplacé axialement par rapport aux billes (11) par rotation dans le filetage de serrage (17).

2. Mandrin de perçage selon la revendication 1, caractérisé en ce que le filetage de serrage (17) est prévu sur le corps (1) du mandrin et que le sens du filetage est choisi de telle sorte que, lorsqu'elle tourne dans le sens de rotation de la bague de réglage (7) qui correspond à l'ouverture du mandrin de perçage, la bague de serrage (12) exécute un déplacement axial, lors duquel la surface de roulement (13) de la bague de serrage (12) déplace radialement vers l'intérieur les billes (11) dans la fente de palier (14).

3. Mandrin de perçage selon la revendication 2, caractérisé en ce que lorsqu'elle tourne dans le sens de rotation de la bague de réglage (7), qui correspond à l'ouverture du mandrin de perçage, la bague de serrage (12) se déplace axialement vers l'avant en direction du foret et que la surface de roulement conique (13) de la bague de serrage (12) se rétrécit vers l'arrière en direction de la broche de perçage.

4. Mandrin de perçage selon la revendication 2 ou 3, caractérisé en ce qu'entre la bague de serrage (12) et le corps (1) du mandrin est prévu un dispositif d'encliquetage (20) comportant des positions d'encliquetage qui se succèdent dans le sens de rotation de la bague de serrage (12).

5. Mandrin de perçage selon la revendication 4, caractérisé en ce que les couples, qui conduisent au desserrage des positions d'encliquetage, sont différents dans des sens de rotation opposés de la bague de serrage (12), et notamment sont plus petits dans le cas de la rotation de la bague de serrage (12) dans le sens de rotation de la bague de réglage (7), qui correspond à l'ouverture du mandrin de perçage, qu'en sens inverse.

6. Mandrin de perçage selon la revendication 4 ou 5, caractérisé en ce que le dispositif d'encliquetage (20) comporte un organe d'encliquetage (22), qui est réglable axialement dans la bague de serrage (12) sous l'action de la force d'un ressort d'encliquetage (21) et qui s'engage dans des évidements d'encliquetage (23), qui sont prévus le long d'un cercle dans un disque annulaire (24), qui est monté fixe sur le corps (1) du mandrin et s'engage radialement par-dessus la bague de serrage (12) sur une surface frontale arrière (12'), qui est tournée vers la broche de perçage.

7. Mandrin de perçage selon la revendication 6, caractérisé en ce que les évidements d'encliquetage (23) sont biseautés au niveau de leur bord dans le sens de rotation de la bague de réglage (7), qui correspond à l'ouverture du mandrin de perçage.

8. Mandrin de perçage selon l'une des revendications 2 à 7, caractérisé en ce qu'un accouplement (25), qui relie la bague de serrage (12) et la bague de réglage (7) selon une liaison de force dans le sens de rotation, est prévu entre ces deux bagues.

9. Mandrin de perçage selon la revendication 8, caractérisé en ce que l'accouplement (25) est formé par un joint torique (26) réalisant une liaison à frottement et qui est retenu dans une gorge annulaire (27) aménagée dans la bague de réglage (7) ou dans la bague de serrage (12).

10. Mandrin de perçage selon la revendication 1, caractérisé en ce que la bague de réglage (7) est constituée par une bague filetée (7.1), qui porte le filetage de réglage (9) et la surface annulaire (15) pour les billes (11), et par une douille de réglage (7.2), la bague filetée et la douille de réglage étant reliées de manière à pouvoir tourner l'une par rapport à l'autre, sans possibilité de déplacement axial, et peuvent être accouplées entre elles dans le sens de rotation au moyen d'un premier dispositif d'encliquetage (30) comportant des positions d'encliquetage qui se succèdent dans le sens de rotation, auquel cas sous l'effet de la rotation de la douille de réglage (7.2) par rapport à la bague filetée (7.1), alors que le dispositif d'encliquetage (30) est ouvert, la bague de serrage (12) est entraînée en rotation dans le filetage de serrage (17), dont le sens est choisi de telle sorte que la bague de serrage (12) exécute, lors de la rotation de la douille de réglage (7.2), par rapport à la bague filetée (7.1), dans le sens de rotation qui correspond à la fermeture du mandrin de perçage, un déplacement axial, lors duquel la surface de roulement (13) de la bague de serrage (12) déplace les billes (11) radialement vers l'intérieur dans la fente de palier (14).

11. Mandrin de perçage selon la revendication 10, caractérisé en ce que lors de la rotation de la douille de réglage (7.2) par rapport à la bague filetée (7.1), dans le sens de rotation correspondant à la fermeture du mandrin de perçage, la bague de serrage (12) se déplace axialement vers l'avant en direction du foret et que la surface de roulement conique (13) de la bague de serrage (12) se rétrécit vers l'arrière en direction de la broche de perçage.

12. Mandrin de perçage selon la revendication 10 ou 11, caractérisé en ce que la bague de serrage (12) est reliée sans possibilité de rotation et de manière à pouvoir se déplacer axialement à la bague filetée (7.1), que le filetage de serrage (17) est prévu sur la douille de réglage (7.2) et que le premier dispositif d'encliquetage (30) comporte une tige d'encliquetage (32), qui est déplaçable radialement dans la bague filetée (7.1) sous l'action de la force d'un ressort d'encliquetage (31) et qui s'engage à travers une fente axiale (33) aménagée dans la bague de serrage (12), dans des évidements d'encliquetage (34), qui sont disposés, en étant répartis dans la direction circonférentielle, dans la face intérieure de la douille de réglage (7.2).

13. Mandrin de perçage selon l'une des revendications 10 à 12, caractérisé en ce qu'entre la bague de serrage (12) et le corps (1) du mandrin est prévu un second dispositif d'encliquetage (40) comprenant des positions d'encliquetage qui se succèdent dans le sens de rotation, les positions d'encliquetage étant indépendantes de la position axiale de la bague de serrage (12) et étant supprimées uniquement dans une position d'extrémité de la bague de serrage (12), située axialement en arrière, en direction de la broche de perçage.

14. Mandrin de perçage selon la revendication 13, caractérisé en ce que le second dispositif d'encliquetage (40) possède une tige d'encliquetage (42), qui est déplaçable radialement dans le corps (1) du mandrin sous l'action de la force d'un ressort d'encliquetage (41) et qui s'engage dans des évidements d'encliquetage (43) disposés d'une manière répartie sur la périphérie, dans la face intérieure de la bague de serrage (12) et qui sont constitués respectivement sous la forme de rainures essentiellement axiales et débouchent, dans l'extrémité avant située en direction du foret, dans une gorge circonférentielle (44) formée dans la bague de serrage (12) et qui reçoit la tige d'encliquetage (42) dans la position d'extrémité arrière de la bague de serrage (12).

15. Mandrin de perçage selon la revendication 13 ou 14, caractérisé en ce que la douille de réglage (7.2) possède une plaque de butée (45), contre laquelle la bague de serrage (12) vient s'appliquer axialement dans sa position d'extrémité arrière.

16. Mandrin de perçage selon la revendication 10 ou 11, caractérisé en ce que la bague de serrage (12) est reliée avec blocage en rotation et avec possibilité de déplacement axial à la douille de réglage (7.2) et que le filetage de serrage (17) est prévu sur la bague filetée (7.1).

17. Mandrin de perçage selon la revendication 10 ou 11, caractérisé en ce que la bague de serrage (12) est reliée avec blocage en rotation et possibilité de déplacement axial à la douille de réglage (7.2) et que le filetage de serrage (17) est prévu sur une bague de support (60), qui porte la surface annulaire (16), fixe par rapport au corps (1) du mandrin, de la fente de palier (14) et qui en outre est déplaçable axialement sur le corps (1) du mandrin et est guidé de manière à pouvoir tourner autour de l'axe (5) du mandrin et qui peut prendre appui axialement sur le côté arrière, c'est-à-dire en direction de la broche de perçage, contre un épaulement annulaire (61) du corps (1) du mandrin, la bague de palier (60) étant bloquée contre toute rotation dans l'état dans lequel elle est supportée contre l'épaulement annulaire (61), et qu'il est prévu un ressort de rappel (75), à l'aide duquel la bague de palier (60) peut être écartée axialement vers l'avant par rapport à l'épaulement annulaire (61), de manière à pouvoir tourner.

18. Mandrin de perçage selon la revendication 17, caractérisé en ce que l'épaulement annulaire (61) et la surface annulaire de la bague de palier (60), qui s'applique contre cet épaulement dans son état supporté, sont réalisés avec une forme conique dont l'angle au sommet diminue axialement vers l'avant.

19. Mandrin de perçage selon la revendication 17 ou 18, caractérisé en ce que le ressort de rappel (70) est un ressort de pression, qui prend appui d'une part sur la bague de palier (60) et d'autre part sur une butée (45) de la douille de réglage (7.2).

20. Mandrin de perçage selon l'une des revendications 16 à 19, caractérisé en ce que le premier dispositif d'encliquetage (30) forme une unité d'engagement à encliquetage, qui pour le desserrage requiert au niveau de la douille de réglage (7.2), un couple plus élevé dans le sens de rotation qui correspond à la fermeture du mandrin de perçage, que dans le sens de rotation opposé, qui correspond à l'ouverture du mandrin de perçage.

21. Mandrin de perçage selon l'une des revendications 1 à 20, caractérisé en ce que, lorsqu'on regarde une coupe transversale de la fente de palier (14), la ligne enveloppe (13') de la surface de roulement (13) de la bague de serrage (12) est perpendiculaire à la bissectrice (18) qui s'étend entre les lignes enveloppes (15',16') des deux surfaces annulaires (15,16) qui délimitent axialement la fente de palier (14).

22. Mandrin de perçage selon la revendication 21, caractérisé en ce que la bissectrice (18) fait un angle de 30° avec les lignes enveloppes (15',16') des surfaces annulaires (15,16).

23. Mandrin de perçage selon l'une des revendications 1 à 22, caractérisé en ce que la surface annulaire (15) qui est fixe par rapport à la bague de réglage (7), est située dans un plan perpendiculaire à l'axe (5) du mandrin.

24. Mandrin de perçage selon l'une des revendications 1 à 23, caractérisé en ce que la bague de réglage (7) est supportée axialement vers l'avant en direction du foret par l'intermédiaire d'un élément de ressort (62), par rapport au corps (1) du mandrin.
